# EUROPEAN PATENT APPLICATION

(11) **EP 3 958 454 A1**
(43) Date of publication of application: **23.02.2022**
(21) Application number: 20854635.8
(22) Date of filing: 15.07.2020
(51) Int. Cl.: H02M 5/458

(54) **SOLID-STATE TRANSFORMER**

(30) Priority: 22.08.2019 CN 201910779686
(71) Applicant: NR ELECTRIC CO., LTD., Jiangning Nanjing, Jiangsu 211102 (CN); NR Engineering Co., Ltd., Nanjing, Jiangsu 211102 (CN)
(72) Inventor: ZHANG, Zhongfeng, Nanjing, Jiangsu 211102 (CN); XIE, Yeyuan, Nanjing, Jiangsu 211102 (CN); CAO, Dongming, Nanjing, Jiangsu 211102 (CN); FANG, Taixun, Nanjing, Jiangsu 211102 (CN); SHENG, Xiaodong, Nanjing, Jiangsu 211102 (CN); YANG, Chen, Nanjing, Jiangsu 211102 (CN); LIAN, Jianyang, Nanjing, Jiangsu 211102 (CN)
(74) Representative: Kurig, Thomas
(86) International application number: PCT/CN2020/102211
(87) International publication number: WO 2021/031749

(57) **Abstract**

A solid-state transformer comprises a plurality of power units (100). Each of the plurality of power units (100) comprises a high-voltage side module (110), a low-voltage side module (120), and an isolation transformer (130). The isolation transformer (130) comprises a high-voltage winding (131), a low-voltage winding (132), and an iron core (133). The high-voltage winding (131) is wound on the iron core (133) and connected to the high-voltage side module (110). The low-voltage winding (132) is wound on the iron core (133) and connected to the low-voltage side module (120). The iron core (133) is in near equipotential connection to the high-voltage side module (110) or the low-voltage side module (120) by means of a conductive medium to fix the floating potential of the iron core (133).

## Description

### Technical Field

The application relates to the technical field of AC/DC power distribution networks, in particular to a solid-state transformer.

### Background

The solid-state transformer (abbreviated as SST), as a novel power equipment, combines the power electronic conversion technology and the high-frequency power conversion technology based on the electromagnetic induction principle, and is able to convert electric energy in one form into electric energy in another form. By applying the solid-state transformer to a power system, the power quality will be improved, the stability of the power system will be improved, and flexible power transmission and real-time control over power flow under the power market are realized. Thus, the solid-state transformer, as a specific implementation facility for operation and control of the energy Internet, will become the core of the energy Internet.

To meet the application requirements of medium-voltage and low-voltage DC power distribution networks, the solid-state transformer based on ISOP (modular input series output parallel) has been widely studied and gained much attention, and comprises N DAB (dual active bridge) power units provided with high-voltage side modules connected in series and low-voltage side modules connected in parallel. Each DAB power unit is typically consisted of a high-voltage side module, an intermediate isolation transformer and a low-voltage side module.

The isolation transformer as the core device of the solid-state transformer is mainly used for isolation, voltage transformation and power transmission, comprises an iron core, a high-voltage winding and a low-voltage winding wound on the iron core, and realizes voltage transformation based on the electromagnetic induction principle. When applied to power distribution networks, high isolation and voltage resistance between the high-voltage winding and the low-voltage winding of the isolation transformer should be taken into account, the dry isolation technique is usually adopted to realize an oil-free design to improve the reliability and safety of the isolation transformer, and epoxy resin is injected between the high-voltage winding, the low-voltage winding and the iron core to meet the requirements for isolation and voltage resistance. Because the iron core of the isolation transformer is located at the innermost position and is wrapped in an insulating medium, it fails to be electrically connected to a main circuit, which will generate a floating potential; if the value of the floating potential is large, a large non-uniform voltage of an electric field will be caused, which will result in partial discharge and even accelerate the aging of the solid insulating medium around in severe cases, thus reducing the insulating property and shortening the service life.

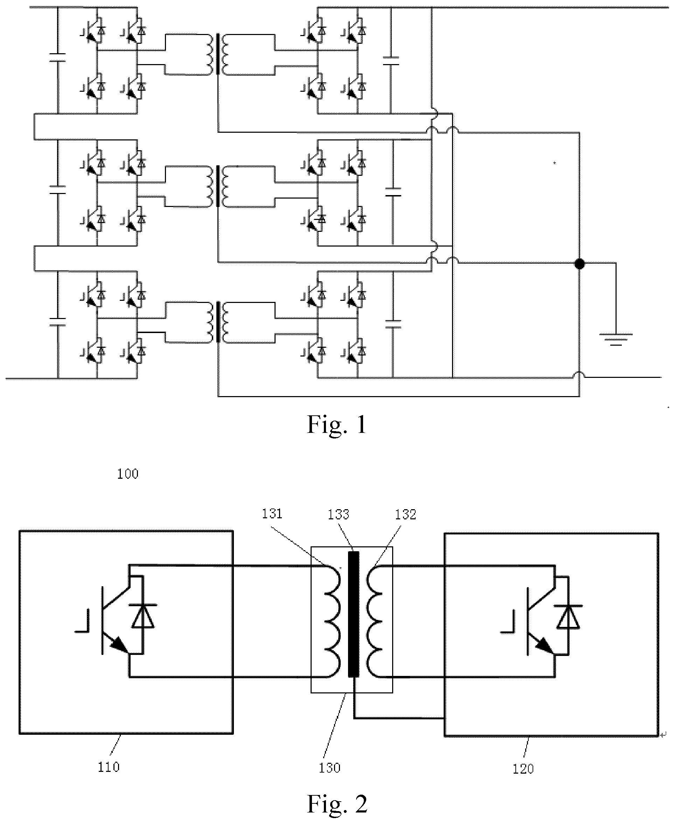

In the prior art, to avoid the floating potential of the iron core of the isolation transformer, the iron core is directly grounded. However, the solid-state transformer based on modular ISOP is internally provided with a plurality of isolation transformers, the high-voltage windings of which are at different high potentials. FIG. 1 is a principle diagram of grounding of iron cores of isolation transformers of a solid-state transformer in the prior art. As shown in FIG. 1, the iron cores of multiple isolation transformers are grounded synchronously, which may put forward higher isolating requirements and lead to a long wiring distance, thus being difficult to implement.

Chinese Patent Application No.CN106920661A provides a high-frequency transformer which is designed in a manner that a resistor is cast between an iron core and a low-voltage winding to realize an electrical connection. However, the voltage difference between the iron core and the low-voltage winding leads to a resistance loss, and the casting of the resistor increases the process complexity and the size of the transformer.

### Summary

In view of this, the present application provides a solid-state transformer being able to effectively fix the floating potential of an iron core, thus avoiding the non-uniformity of an electric field caused by the floating potential of the iron core.

The application provides a solid-state transformer. The solid-state transformer comprises a plurality of power units. Each of the plurality of power units comprises a high-voltage side module, a low-voltage side module and an isolation transformer, wherein the isolation transformer comprises a high-voltage winding, a low-voltage winding and an iron core, the high-voltage winding is wound on the iron core and connected to the high-voltage side module, the low-voltage winding is wound on the iron core and connected to the low-voltage side module, and the iron core is in equipotential connection to the high-voltage side module or the low-voltage side module by means of a conductive medium to fix the floating potential of the iron core.

According to some embodiments, a point of the equipotential connection is one of a capacitor negative terminal of the high-voltage side module, a capacitor positive terminal of the high-voltage side module, a capacitor negative terminal of the low-voltage side module and a capacitor positive terminal of the low-voltage side module.

According to some embodiments, the iron core is connected to a metal case of the isolation transformer by means of a conductive medium, and the metal case of the isolation transformer is connected to the capacitor negative terminal of the low-voltage side module by means of the conductive medium.

According to some embodiments, the iron core is connected to a metal case of the isolation transformer by means of a conductive medium, and the metal case of the isolation transformer is connected to the capacitor positive terminal of the low-voltage side module by means of the conductive medium.

According to some embodiments, the iron core is connected to a metal case of the isolation transformer by means of a conductive medium, and the metal case of the isolation transformer is connected to the capacitor negative terminal of the high-voltage side module by means of the conductive medium.

According to some embodiments, the iron core is connected to a metal case of the isolation transformer by means of a conductive medium, and the metal case of the isolation transformer is connected to the capacitor positive terminal of the high-voltage side module by means of the conductive medium.

According to some embodiments, the conductive medium comprises a metal wire and/or a connecting copper busbar.

According to some embodiments, each of the high-voltage side module and the low-voltage side module comprises a power electronic converter with a power semiconductor device for controlling DC-AC conversion.

According to some embodiments, the high-voltage side modules of the plurality of power units are connected in series, and the low-voltage side modules of the plurality of power units are connected in parallel.

According to some embodiments, the isolation transformer comprises a dry medium-high frequency isolation transformer and has an operating frequency greater than or equal to 3kHz.

According to some embodiments, the isolation transformer is of a single-winding or multi-winding structure.

According to some embodiments, an insulating medium is filled between the high-voltage winding, the low-voltage winding and the iron core.

According to the technical solution provided by the application, the floating potential of the iron core is effectively fixed, such that the non-uniformity of an electric field caused by the floating potential of the iron core of the isolation transformer is avoided; and compared with the method of grounding the iron core with a long grounding line, the wiring distance is short, implementation is easy, the level of partial discharge of the isolation transformer in the solid-state transformer is reduced, the insulating property of the solid-state transformer is effectively improved, and the service life of the solid-state transformer is effectively prolonged.

### Brief Description of the Drawings

To more clearly explain the technical solutions of the embodiments of the application, drawings used for describing the embodiments will be briefly introduced below. Clearly, the drawings in the following description merely illustrate some embodiments of the application, and those ordinarily skilled in the art may obtain other drawings according to the following ones without creative labor.
FIG. 1 is a principle diagram of grounding of iron cores of isolation transformers of a solid-state transformer in the prior art;
FIG. 2 is a principle diagram of a power unit of a solid-state transformer according to one embodiment of the application;
FIG. 3 is a principle diagram of near equipotential connection between iron cores and capacitor negative terminals of low-voltage side modules of isolation transformers of a solid-state transformer according to one embodiment of the application.
FIG. 4 is a principle diagram of near equipotential connection between iron cores and capacitor positive terminals of low-voltage side modules of isolation transformers of a solid-state transformer according to one embodiment of the application.
FIG. 5 is a principle diagram of near equipotential connection between iron cores and capacitor negative terminals of high-voltage side modules of isolation transformers of a solid-state transformer according to one embodiment of the application.
FIG. 6 is a principle diagram of near equipotential connection between iron cores and capacitor positive terminals of high-voltage side modules of isolation transformers of a solid-state transformer according to one embodiment of the application.

### Detailed Description of Embodiments

To better clarify the purposes, technical solutions and advantages of the embodiments of the application, specific implementations of the technical solutions of the application will be more clearly described in further detail below. However, the specific implementations and embodiments in the following description are merely for the purpose of description, and should not be construed as limitations of the application. The following embodiments are merely illustrative ones, and are not all possible ones of the application. Other embodiments obtained by those skilled in the art based on various changes to the application should also fall within the protection scope of the application.

Generally, a solid-state transformer is consisted of a high-voltage module (input module), an isolation module and a low-voltage module (output module), which constitute a tertiary structure topology. On the high-voltage side, a plurality of modules connected in series is usually used for voltage division, and the interiors of the modules are separated. The input module is a rectifier capable of realizing a unit power factor and is used to convert an input alternating current into a direct current. The isolation module is used to reduce a DC signal to a direct current by AC-DC conversion, and direct currents output by the isolation module are connected in parallel and then transmitted to the output module, and the output module inverts the direct current into a required power-frequency direct current and then outputs the power-frequency alternating current. Such a structure meets the requirements of step-down transformers for high-voltage low currents and low-voltage high currents.

FIG. 2 is a principle diagram of a power unit of a solid-state transformer according to one embodiment of the application.

As shown in FIG. 2, a solid-state transformer comprises a plurality of power units 100. Each of the plurality of power units 100 comprises a high-voltage side module 110, a low-voltage side module 120, and an isolation transformer 130, wherein the high-voltage side module 110 and the low-voltage side module 120 each comprise a power electronic converter used for controlling AC-DC conversion and including a power semiconductor device.

According to some embodiments, the isolation transformer 130 comprises a high-voltage winding 131, a low-voltage winding 132 and an iron core 133.

Specifically, the high-voltage winding 131 is wound on the iron core and connected to the high-voltage side module 110. The low-voltage winding 132 is wound on the iron core and connected to the low-voltage side module 120. The iron core 133 is in near equipotential connection to the high-voltage side module 110 or the low-voltage side module 120 by means of a conductive medium to fix the floating potential of the iron core 133. The isolation transformer 130 is of a single-winding or multi-winding structure, and an insulating medium is filled between the high-voltage winding 131, the low-voltage winding 132 and the iron core 133. The isolation transformer 130 comprises a dry medium-high frequency isolation transformer and has an operating frequency greater than or equal to 3kHz, and the application has no limitation in this aspect.

Preferably, the high-voltage side modules 110 of the plurality of power units 100 are connected in series and are able to tolerate a high voltage. The low-voltage side modules 120 of the plurality of power units 100 are connected in parallel and are able to tolerate a high current. The application has no limitation in this aspect.

According to the technical solution provided by this embodiment, the floating potential of the iron core is effectively fixed, such that the non-uniformity of an electric field caused by the floating potential of the iron core of the isolation transformer is avoided; and compared with the method of grounding the iron core with a long grounding line, the wiring distance is shorter, implementation is easier, the problems of difficult path planning of the floating potential or the long grounding line and complex wiring are avoided, the level of partial discharge of the isolation transformer in the solid-state transformer is reduced, the insulating property of the solid-state transformer is effectively improved, and the service life of the solid-state transformer is effectively prolonged.

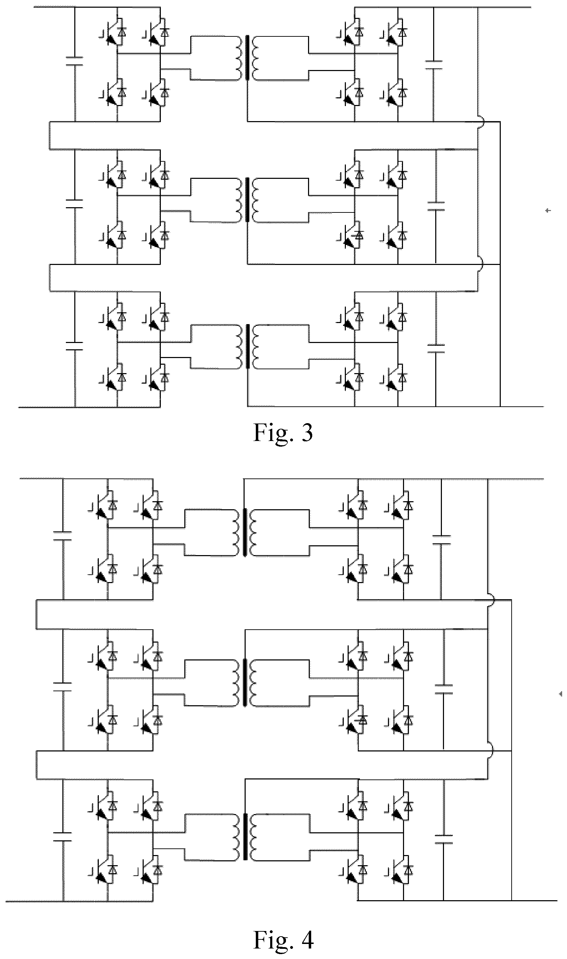

FIG. 3 is a principle diagram of near equipotential connection between iron cores and capacitor negative terminals of low-voltage side modules of isolation transformers of a solid-state transformer according to one embodiment of the application. The specific composition of the power units of the solid-state transformer is shown in FIG. 2.

As shown in FIG. 3, points of the equipotential connection are capacitor negative terminals of the low-voltage side modules of the plurality of power units. In actual implementation, metal cases of the modules are generally taken as reference potential points, so in this embodiment, the iron cores are in near connection to metal cases of the isolation transformers by means of a conductive medium, and the capacitor negative terminals of the low-voltage side modules are in near connection to the meal cases of the isolation transformers by means of the conductive medium. The conductive medium comprises a metal wire and/or a connecting copper busbar.

Furthermore, if the cases of the low-voltage side modules are also metal cases, in actual implementation, the iron cores are in near connection to the metal cases of the isolation transformers by means of a conductive medium, the capacitor negative terminals of the low-voltage side modules are in near connection to the metal cases of the low-voltage side modules by means of the conductive medium, and then, the metal cases of the isolation transformers are in near connection to the metal cases of the low-voltage side modules by means of the conductive medium. The conductive medium comprises a metal wire and/or a connecting copper busbar.

FIG. 4 is a principle diagram of near equipotential connection between iron cores and capacitor positive terminals of low-voltage side modules of isolation transformers of a solid-state transformer according to one embodiment of the application. The specific composition of the power units of the solid-state transformer is shown in FIG. 2.

As shown in FIG. 4, points of the equipotential connection are capacitor positive terminals of the low-voltage side modules of the plurality of power units. In actual implementation, metal cases of the modules are generally taken as reference potential points, so in this embodiment, the iron cores are in near connection to metal cases of the isolation transformers by means of a conductive medium, and the capacitor positive terminals of the low-voltage side modules are in near connection to the meal cases of the isolation transformers by means of the conductive medium. The conductive medium comprises a metal wire and/or a connecting copper busbar.

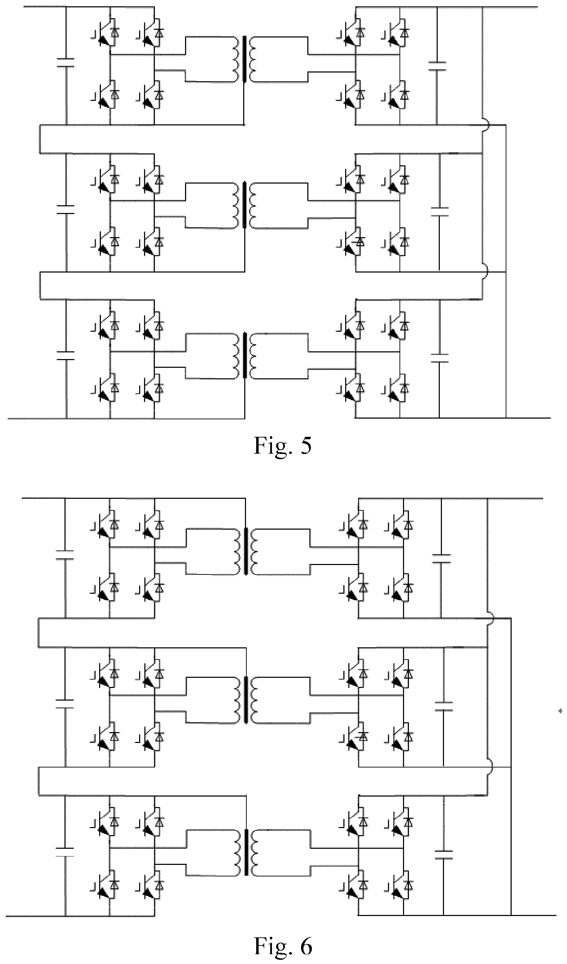

FIG. 5 is a principle diagram of near equipotential connection between iron cores and capacitor negative terminals of high-voltage side modules of isolation transformers of a solid-state transformer according to one embodiment of the application. The specific composition of the power units of the solid-state transformer is shown in FIG. 2.

As shown in FIG. 5, points of the equipotential connection are capacitor negative terminals of the high-voltage side modules of the plurality of power units. In actual implementation, metal cases of the modules are generally taken as reference potential points, so in this embodiment, the iron cores are in near connection to metal cases of the isolation transformers by means of a conductive medium, the capacitor negative terminals of the high-voltage side modules are in near connection to the meal cases of the low-voltage side modules by means of the conductive medium, and then the metal cases of the isolation transformers are in near connection to the metal cases of the high-voltage side modules by means of the conductive medium. The conductive medium comprises a metal wire and/or a connecting copper busbar.

FIG. 6 is a principle diagram of near equipotential connection between iron cores and capacitor positive terminals of high-voltage side modules of isolation transformers of a solid-state transformer according to one embodiment of the application. The specific composition of the power units of the solid-state transformer is shown in FIG. 2.

As shown in FIG. 6, points of the equipotential connection are capacitor positive terminals of the high-voltage side modules of the plurality of power units. In actual implementation, metal cases of the modules are generally taken as reference potential points, so in this embodiment, the iron cores are in near connection to metal cases of the isolation transformers by means of a conductive medium, and the capacitor positive terminals of the high-voltage side modules are in near connection to the meal cases of the isolation transformers by means of the conductive medium. The conductive medium comprises a metal wire and/or a connecting copper busbar.

It should be noted that each embodiment described above with reference to the accompanying drawings is merely used to explain the application, and is not intended to limit the scope of the application. Those ordinarily skilled in the art would appreciate that all amendments or equivalent substitutions to the application made without departing from the spirit and scope of the application should also fall within the scope of the invention. In addition, unless otherwise specified in the context, terms expressed in a singular form include the plural form, vice versa. In addition, unless otherwise specifically stated, all or part of any embodiments may be implemented in combination with all or part of any other embodiments.

## Claims

1. A solid-state transformer, comprising:
a plurality of power units, each of the plurality of power units comprising:
a high-voltage side module;
a low-voltage side module; and
an isolation transformer, comprising:
a high-voltage winding wound on an iron core and connected to the high-voltage side module; and
a low-voltage winding wound on the iron core and
connected to the low-voltage side module;
the iron core being in near equipotential connection to the high-voltage side module or the low-voltage side module by means of a conductive medium to fix a floating potential of the iron core.

2. The solid-state transformer according to Claim 1, wherein a point of the equipotential connection is one of a capacitor negative terminal of the high-voltage side module, a capacitor positive terminal of the high-voltage side module, a capacitor negative terminal of the low-voltage side module and a capacitor positive terminal of the low-voltage side module.

3. The solid-state transformer according to Claim 2, wherein the iron core is connected to a metal case of the isolation transformer by means of a conductive medium, and the metal case of the isolation transformer is connected to the capacitor negative terminal of the low-voltage side module by means of the conductive medium.

4. The solid-state transformer according to Claim 2, wherein the iron core is connected to a metal case of the isolation transformer by means of a conductive medium, and the metal case of the isolation transformer is connected to the capacitor positive terminal of the low-voltage side module by means of the conductive medium.

5. The solid-state transformer according to Claim 2, wherein the iron core is connected to a metal case of the isolation transformer by means of a conductive medium, and the metal case of the isolation transformer is connected to the capacitor negative terminal of the high-voltage side module by means of the conductive medium.

6. The solid-state transformer according to Claim 2, wherein the iron core is connected to a metal case of the isolation transformer by means of a conductive medium, and the metal case of the isolation transformer is connected to the capacitor positive terminal of the high-voltage side module by means of the conductive medium.

7. The solid-state transformer according to Claim 1, wherein the conductive medium comprises a metal wire and/or a connecting copper busbar.

8. The solid-state transformer according to Claim 1, wherein each of the high-voltage side module and the low-voltage side module comprises a power electronic converter with a power semiconductor device for controlling DC-AC conversion.

9. The solid-state transformer according to Claim 1, wherein the high-voltage side modules of the plurality of power units are connected in series, and the low-voltage side modules of the plurality of power units are connected in parallel.

10. The solid-state transformer according to Claim 1, wherein the isolation transformer comprises a dry medium-high frequency isolation transformer and has an operating frequency greater than or equal to 3kHz.

11. The solid-state transformer according to Claim 1, wherein the isolation transformer is of a single-winding or multi-winding structure.

12. The solid-state transformer according to Claim 1, wherein an insulating medium is filled between the high-voltage winding, the low-voltage winding and the iron core.
